# EUROPÄISCHE PATENTSCHRIFT

(11) **EP 3 496 993 B1**
(45) Veröffentlichungstag und Bekanntmachung des Hinweises auf die Patenterteilung: **13.05.2020**
(21) Anmeldenummer: 17749724.5
(22) Anmeldetag: 09.08.2017
(51) Int. Cl.: B62D 1/185, B62D 1/20, F16D 3/06, F16C 3/03, F16C 29/02, F16C 33/20, F16D 3/40

(54) **VERFAHREN ZUR HERSTELLUNG EINER LÄNGENVERÄNDERBAREN LENKWELLE UND LÄNGENVERÄNDERBARE LENKWELLE**
METHOD FOR MANUFACTURING AN AXIAL ADJUSTABLE STEERING SHAFT AND AN AXIAL ADJUSTABLE STEERING SHAFT
PROCÉDÉ DE MANUFACTURE D'UN ARBRE DE DIRECTION AJUSTABLE EN LONGUEUR ET UN AXE DE DIRECTION AJUSTABLE EN LONGUEUR

(30) Priorität: 11.08.2016 DE 102016215023
(43) Veröffentlichungstag der Anmeldung: 19.06.2019
(73) Patentinhaber: thyssenkrupp Presta AG, 9492 Eschen (LI); thyssenkrupp AG, 45143 Essen (DE)
(72) Erfinder: BREUER, Marius, 48307 Rochester Hills, Michigan (US); DUROT, Janick, 9443 Widnau (CH); SCHWARZHANS, Paul, 6800 Feldkirch (AT); TÜRTSCHER, Joachim, 6800 Feldkirch-Tisis (AT); MÄRK, Robert Josef, 6800 Feldkirch (AT)
(74) Vertreter: thyssenkrupp Intellectual Property GmbH
(86) Internationale Anmeldenummer: PCT/EP2017/070221
(87) Internationale Veröffentlichungsnummer: WO 2018/029265

(56) Entgegenhaltungen:
- WO-A1-2015/162019
- WO-A1-2016/082969
- DE-A1-102008 049 825
- GB-A- 2 316 150

## Beschreibung

### Stand der Technik

Die vorliegende Erfindung betrifft ein Verfahren zur Herstellung einer längenveränderbaren Lenkwelle, umfassend eine Hohlwelle, in der eine Zahnwelle in axialer Richtung teleskopierbar aufgenommen ist, die eine Verzahnung mit sich auf dem Außenumfang in axialer Richtung erstreckenden Zähnen aufweist, die in eine Innenverzahnung der Hohlwelle formschlüssig eingreift, wobei zwischen der Innenverzahnung und der Verzahnung zumindest abschnittweise eine Gleitschicht aus thermoplastischem Kunststoff angebracht wird, wobei vor dem Anbringen der Gleitschicht im Bereich der Verzahnung der Zahnwelle oder der Innenverzahnung der Hohlwelle Formschlusselemente ausgebildet werden, die mit der Gleitschicht in Eingriff gebracht werden zur Bildung einer in axialer Richtung wirksamen Formschlussverbindung. Eine nach dem erfindungsgemäßen Verfahren hergestellte Lenkwelle ist ebenfalls Gegenstand der Erfindung.

Eine teleskopierbare Lenkwelle der eingangs genannten Art, die in der Lenkung eines Kraftfahrzeugs zur Übertragung des Lenkmoments vom Lenkrad zum Lenkgetriebe dient, ist beispielsweise aus der DE 10 2014 105 822 A1 oder der US 2015/0210309 bekannt. Um eine Verstellung des Lenkrads relativ zur Fahrerposition in Längsrichtung, d.h. in Richtung der Längsachse zu ermöglichen, ist zumindest ein Wellenabschnitt zwischen dem Lenkrad und dem Lenkgetriebe teleskopierbar und damit längenverstellbar ausgestaltet. Der längenverstellbare Wellenabschnitt kann die fahrerseitige Lenkspindel bilden oder die Lenkzwischenwelle zwischen der Lenkspindel und dem Lenkgetriebe.

Die Lenkwelle weist einen als Hohlwelle ausgebildeten ersten Wellenteil mit einer Innenverzahnung auf, die sich in axialer Richtung erstreckende Zähne aufweist, und einem in diesem teleskopierbaren, als Zahnwelle ausgebildeten zweiten Wellenteil mit einer äußeren Verzahnung, welche zur Drehmomentübertragung formschlüssig in die Innenverzahnung eingreift und eine teleskopartige, axiale Verstellung der beiden Wellenteile relativ zueinander ermöglicht.

Zwischen der Verzahnung und der Innenverzahnung, die aus einem Metallwerkstoff bestehen, in der Regel Stahl oder eine Aluminiumlegierung, ist eine Gleitschicht angeordnet. Die Gleitschicht besteht aus Kunststoff, der weicher und elastischer ist als der Metallwerkstoff der Verzahnungen und einen geringeren Reibungswiderstand im Gleitkontakt mit den metallischen Oberflächen der Verzahnungen hat. Dadurch wird das Verdrehspiel reduziert und die beim teleskopierenden Verstellen auftretende Reibungskraft vermindert. Dies ermöglicht ein spielfreies, präzises Lenken und eine angenehme, geschmeidige und gleichmäßige Längspositionierung des Lenkrads ohne ruckartige Störungen (Stick-Slip-Effekt). Außerdem werden in vorteilhafter Weise die Übertragung von Vibrationen und die Entstehung von Geräuschen unterdrückt.

Die Gleitschicht kann als Gleitbeschichtung durch Umspritzung aus thermoplastischem Kunststoff ausgebildet werden, wobei der Kunststoff im schmelzflüssigen Zustand in einem Spritzgussverfahren zur Bildung einer Schicht auf die Verzahnung aufgebracht wird, wie in der genannten DE 10 2014 105 822 A1 oder US 2015/0210309 beschrieben. Die Gleitschicht wird auf diese Weise kraftschlüssig mit der Verzahnung verbunden. Der Gleitkontakt besteht zwischen der äußeren, der kraftschlüssigen Verbindung abgewandten, freien Oberfläche der Kunststoffschicht, die beim Verstellen mit der Zahnwelle in axialer Richtung relativ zur Innenverzahnung der Hohlwelle bewegt wird.

Aufgrund der beim Verstellen wirkenden Kräfte wird die feste Verbindung zwischen der Gleitschicht und der Verzahnung, im vorgenannten Stand der Technik die kraftschlüssige Verbindung der Umspritzung, durch Scherkräfte in axialer Richtung beansprucht. Dadurch kann sich die Gleitschicht von der Verzahnung ablösen, so dass sie beim Verstellen nicht mehr mitgenommen wird und unkontrolliert in axialer Richtung zwischen der Innenverzahnung und der Verzahnung wandern kann. Im ungünstigsten Fall kann die Gleitschicht in axialer Richtung von der Zahnwelle abgezogen werden, was zu einer Beeinträchtigung der Verstellung führen kann.

Aus der GB 2 316 150 A ist ein Verfahren und eine Lenkwelle der eingangs genannten Art nach dem Oberbegriff des Anspruchs 1 bekannt. Nachteilig daran ist die aufwendige Befestigung der Gleitschicht.

Angesichts der vorangehend erläuterten Problematik ist es eine Aufgabe der vorliegenden Erfindung, ein Verfahren anzugeben, welches eine verbesserte Befestigung der Gleitschicht auf der Verzahnung ermöglicht. Weiterhin soll eine Lenkwelle zur Verfügung gestellt werden mit einer verbesserten Anbringung der Gleitschicht.

### Darstellung der Erfindung

Zur Lösung der vorgenannten Problematik wird erfindungsgemäß vorgeschlagen, dass die Formschlusselemente in die Oberfläche der Verzahnung oder der Innenverzahnung plastisch eingeformt werden, und mittels rotierender Profilwalzen die in axialer Richtung auf der Oberfläche der Verzahnung abrollen, in die Oberfläche eingewalzt werden.

Erfindungsgemäß werden die Formschlusselemente mittels rotierender Profilwalzen, die in axialer Richtung auf der Oberfläche der Verzahnung abrollen, in die Oberfläche eingewalzt, beispielsweise durch Rollieren oder Rändeln. Derartige an sich bekannte Verfahren zur Kaltumformung ermöglichen eine effektive und rationelle Fertigung. Zusätzlich wird die Oberfläche lokal verfestigt, wodurch die Belastbarkeit und Haltbarkeit erhöht wird. Zum Einformen der Formschlusselemente kann die Zahnwelle oder die Hohlwelle in axialer Richtung zwischen bevorzugt einander gegenüberliegenden Profilwalzen hindurchbewegt werden. Durch die als Rollier- oder Rändelwalzen ausgebildeten Profilwalzen kann in einem effizienten Durchlaufverfahren eine Profilierung in Form einer Rändelung in die entsprechenden Oberflächen eingeprägt, d.h. kalt eingeformt werden. Die Profilwalzen weisen bevorzugt während des Einformens der Formschlusselemente einen festen und unveränderbaren Achsabstand zueinander auf. Die Rändelung kann flächenhaft ausgedehnt werden, beispielsweise über die Flanken der Zähne, und abwechselnd angeordnete Erhöhungen und Vertiefungen aufweisen. Es können langgestreckte, parallel angeordnete Erhöhungen und Vertiefungen zur Bildung einer einfachen Rändelung vorgesehen sein, oder auch eine Kreuzrändelung mit gekreuzt angeordneten Erhöhungen und Vertiefungen. Durch die konkrete Ausgestaltung der Rändelung bezüglich der Tiefe und Form der Einformungen sowie dem Abstand der Einformungen voneinander kann der formschlüssige Eingriff an die jeweiligen Materialeigenschaften angepasst werden. Über die gerändelte Fläche wird eine durchgehende, haltbare und belastbare formschlüssige Verbindung mit der Gleitschicht erreicht.

Erfindungsgemäß wird die Oberfläche im Bereich der Verzahnung der Zahnwelle oder der Hohlwelle mit Formschlusselementen versehen, die sich gegen korrespondierende Formschlusselemente an der Gleitschicht in axialer Richtung abstützen. Derartige axial wirksame Formschlusselemente können beispielsweise langgestreckte steg-, rippen- oder wulstartige Vorsprünge und/oder riffel- oder nutartige Vertiefungen umfassen, die sich quer zur axialen Richtung erstrecken, oder auch kuppenförmige Vorsprünge oder Noppen, und/oder mulden- oder napfartige Vertiefungen.

Gemäß dem erfindungsgemäßen Verfahren wird die Oberfläche vor der Erzeugung der festen Verbindung mit der Gleitschicht mit den Formschlusselementen versehen. Der formschlüssige Eingriff mit der Gleitschicht kann in einem nachfolgenden Verfahrensschritt durch die Einformung des Kunststoffmaterial der Gleitschicht in die Formschlusselemente erfolgen, so dass sich das Kunststoffmaterial der Gleitschicht an die Formschlusselemente anschmiegt und somit die Formschlusselemente mit dem Kunststoff in Eingriff treten.

Bei der Erfindung können die Formschlusselemente an der Zahnwelle ausgebildet sein, falls die Gleitschicht fest mit der Zahnwelle verbunden werden soll, wie in dem oben zitierten Stand der Technik, wobei der Gleitkontakt beim Verstellen zwischen der Innenverzahnung der Hohlwelle und der Gleitschicht besteht. Es ist ebenfalls möglich, dass die Formschluss-elemente in der Hohlwelle ausgebildet sind, um die Gleitschicht in axialer Richtung in der Hohlwelle zu fixieren, so dass der Gleitkontakt zwischen der Verzahnung der Zahnwelle und der Gleitschicht besteht.

Unter der Verzahnung der Zahnwelle ist eine Außenverzahnung zu verstehen.

Die Gleitschicht kann durch eine Gleitbeschichtung aus thermoplastischem Kunststoff gebildet werden, mit der die Verzahnung oder die Innenverzahnung umspritzt wird. Beim Umspritzen, wie dies in dem oben zitierten Stand der Technik beschrieben wird, wird die Verzahnung einschließlich der Formschlusselemente im Spritzgießverfahren von schmelzflüssigem Kunststoff umschlossen, so dass die Formschlusselemente nach dem Erstarren in den Kunststoffkörper der Gleitschicht eingebettet sind. Die als Gleitbeschichtung ausgebildete Gleitschicht wird zum fest verbundenen Bestandteil der Zahn- oder Hohlwelle. Erfindungsgemäß wird dabei eine besonders belastbare stoff- und formschlüssige Verbindung zwischen Verzahnung und Gleitschicht ausgebildet.

Alternativ kann die Gleitschicht durch eine Gleithülse gebildet werden, die zwischen die Verzahnung und die Innenverzahnung in axialer Richtung eingefügt wird, wobei die Formschlusselemente plastisch in die Gleithülse eingeformt werden. Dabei kann die Gleitschicht durch eine Gleithülse realisiert werden, die zunächst separat hergestellt wird, beispielsweise aus Kunststoff im Spritzguss oder Extrusionsverfahren. Deren Abmessungen und Form werden so angepasst, dass die Gleithülse möglichst spielfrei oder mit Untermaß unter radialer elastischer Vorspannung in axialer Richtung auf die Verzahnung der Zahnwelle aufgepresst oder mit Übermaß in die Innenverzahnung der Hohlwelle eingepresst werden kann, so dass ein kraftschlüssiger Sitz der Gleithülse auf den Zähnen erzeugt wird. Die erfindungsgemäßen Formschlusselemente werden dann in die kraftschlüssig anliegende Sitzfläche der Gleithülse eingeformt. Dies kann bereits durch die von der Gleithülse selbst beim Aufpressen im Presssitz ausgeübten elastischen Kräfte erfolgen. Alternativ oder zusätzlich kann nachträglich von außen eine Andruckkraft auf die freie Gleitfläche der Gleithülse aufgebracht werden, so dass die Formschlusselemente unter Bildung eines formschlüssigen Eingriffs in den Kunststoff der Gleithülse plastisch eingepresst werden. Die äußere Andruckkraft kann bei der Fertigung einer längenveränderbaren Lenkwelle bevorzugt dadurch ausgeübt werden, dass die Gleithülse beim formschlüssigen axialen Einfügen der Zahnwelle in die Hohlwelle zwischen der Verzahnung und der Innenverzahnung koaxial zusammengepresst wird. Hierzu wird die Zahnwelle mit den Formschlusselementen versehen, und die Gleithülse wird axial auf den mit den Formschlusselementen versehenen Bereich aufgebracht. Anschließend wird die Zahnwelle zusammen mit der Gleithülse in axialer Richtung in die Hohlwelle eingefügt, wobei über die Innenverzahnung von außen auf die Gleitfläche eine Kraft ausgeübt wird, welche die Gleithülse von außen radial gegen die Zahnwelle anpresst. Dabei graben sich die Formschlusselemente in das Kunststoffmaterial ein und bewirken, dass die Gleithülse durch die dabei erzeugte formschlüssige Verbindung fest mit der Zahnwelle verbunden wird und so die erfindungsgemäße Gleitschicht bildet. Alternativ ist es möglich, dass die Formschlusselemente im Bereich der Innenverzahnung der Hohlwelle ausgebildet sind. Dann wird die Gleithülse zuerst in axialer Richtung in die Innenverzahnung eingefügt, und anschließend wird beim axialen Einführen der Zahnwelle die Gleithülse von innen gegen die Formschlusselemente angedrückt, so dass eine fest mit der Hohlwelle verbundene Gleitschicht realisiert wird, in der die Zahnwelle axial in der Gleitschicht teleskopierbar gelagert ist.

Alternativ kann es vorgesehen sein, dass die Gleithülse nach dem Aufbringen und Positionieren auf der Zahnwelle bzw. nach dem Einbringen und Positionieren der Gleithülse in der Hohlwelle thermische Energie eingetragen wird und die Gleithülse erwärmt wird, so dass diese sich an die Formschlusselemente anschmiegt und somit der Formschluss zwischen Gleithülse und Formschlusselemente ausgebildet wird.

Es kann vorgesehen sein, dass die Formschlusselemente als Profilierung ausgebildet sind mit einer Mehrzahl von in axialer Richtung voneinander beabstandeten Erhebungen und/oder Vertiefungen. Die Profilierung kann eine Mehrzahl von vorstehenden Erhebungen, beispielsweise in Form der oben genannten Vorsprünge, oder von in die Oberfläche eingeformten Vertiefungen wie oben beschrieben aufweisen, oder im Wechsel angeordnete Erhebungen und Vertiefungen. Die dermaßen aus einer Vielzahl von Erhebungen und/oder Vertiefungen gebildete Profilierung kann sich bevorzugt über einen flächig ausgedehnten Abschnitt im Bereich der Verzahnung oder Innenverzahnung erstrecken. Daran ist vorteilhaft, dass in dem Flächenbereich der Profilierung ein sicherer formschlüssiger Eingriff in die Gleitschicht gewährleistet ist, der durch die flächige Ausdehnung eine sichere und gleichmäßige Kraftübertragung in axialer Richtung gewährleistet, wodurch ein fester Sitz der Gleitschicht auf der Verzahnung oder in der Innenverzahnung gewährleistet ist.

Die Formschlusselemente, die als Profilierung ausgestaltet sein können, werden bevorzugt auf oder in den Zahnoberflächen ausgebildet, vorzugsweise auf den Zahnflanken der Zähne der Verzahnung oder der Innenverzahnung. Dadurch kann die Haftung der Gleitschicht auf der Verzahnung erhöht werden, ohne dass zusätzliche Befestigungsmittel vorgesehen werden müssten, wie beispielsweise Widerlager, Anschläge oder dergleichen außerhalb der Zähne, welche in nachteiliger Weise die Verzahnung schwächen oder den Bauraum vergrößern könnten. Dabei ist erfindungsgemäß eine besonders feste Haftung der Gleitschicht in den seitlichen Bereichen der Zähne gewährleistet, die im Betrieb besonders beansprucht werden. Zusätzlich ist dabei von Vorteil, dass durch das beim Lenken über die Zahnflanken übertragene Drehmoment die Gleitschicht gegen die erfindungsgemäßen Formschlusselemente angepresst wird, wodurch die Formschlussverbindung im Betrieb zusätzlich sicher in Eingriff gehalten wird. Zusätzlich oder alternativ können die Formschlusselemente auf den Zahnspitzen und/oder in den Zwischenbereichen in Umfangsrichtung zwischen den Zähnen ausgebildet werden.

Bei der Umsetzung des Verfahrens ist es vorteilhaft, dass die Formschlusselemente in die Oberfläche der Verzahnung oder der Innenverzahnung plastisch eingeformt werden. Verfahren zur plastischen Materialverformung erzeugen durch lokales Einpressen von Werkzeugen mit hohem Druck Vertiefungen. Das dabei plastisch verdrängte Material formt benachbart zu den Vertiefungen aufgeworfene Erhöhungen, so dass eine flächig durchgehende Profilierung erzeugt wird.
Die Tiefe der Formschlusselemente kann bevorzugt 10% bis 40% der Materialdicke der Gleitschicht betragen. Dadurch können die Formschlusselemente und die Gleitschicht formschlüssig und unter einer verbesserten Kraftübertragung ineinander eingreifen. Im Fall, dass die Gleitschicht unterschiedliche Materialdicken aufweist, ist die Materialdicke in dem Bereich zur Auslegung der Tiefe der Formschlusselemente entscheidend, in dem die Gleitschicht mit den Formschlusselementen zusammenwirkt, d.h. in dem die Formschlusselemente in die Gleitschicht eingreifen. Die Tiefe der Formschlusselemente, beispielsweise einer Rändelung, kann bevorzugt zwischen 0,05 und 0,30 mm betragen. Dadurch ist sichergestellt, dass durch die Einbringung der erfindungsgemäßen Formschlusselemente keine funktionale Beeinträchtigung der Verzahnung erfolgt. Außerdem kann eine rationelle Erzeugung der Formschlusselemente mittels nichtspanender Kaltverformung erfolgen, beispielsweise durch Rollieren, Rändeln oder Prägen.

Eine erfindungsgemäße längenveränderbare Lenkwelle umfasst eine Hohlwelle, in der eine Zahnwelle in axialer Richtung teleskopierbar aufgenommen ist, die eine Verzahnung mit sich auf dem Außenumfang in axialer Richtung erstreckenden Zähnen aufweist, die in eine Innenverzahnung der Hohlwelle formschlüssig eingreift, wobei zwischen der Innenverzahnung und der Verzahnung zumindest abschnittweise eine Gleitschicht aus thermoplastischem Kunststoff angebracht ist. Um die Befestigung der Gleitschicht auf der Verzahnung zu verbessern, wird erfindungsgemäß vorgeschlagen, dass im Bereich der Verzahnung der Zahnwelle oder der Innenverzahnung der Hohlwelle Formschlusselemente ausgebildet sind, die mit der Gleitschicht in Eingriff stehen zur Bildung einer in axialer Richtung wirksamen Formschlussverbindung.

Bevorzugt erfolgt die Herstellung der Lenkwelle gemäß dem oben beschriebenen Verfahren. Dabei ist vorteilhaft, dass die Formschlusselemente eine Profilierung mit einer Mehrzahl von in axialer Richtung voneinander beabstandeten Erhebungen und/oder Vertiefungen umfassen, die bevorzugt äquidistant angeordnet sind.

Die Gleitschicht kann als Umspritzung ausgebildet sein, die im Spritzgussverfahren auf die Verzahnung aufgebracht wird und kraftschlüssig mit dieser verbunden ist. Alternativ kann die Gleitschicht als Gleithülse ausgebildet sein, die als separates Teil gefertigt und in einem nachfolgenden Schritt zwischen Hohlwelle und Zahnwelle eingefügt wird. In jedem Fall greifen die Formschlusselemente zur Bildung einer in axialer Richtung wirksamen Formschlussverbindung in die Gleitschicht ein.

### Beschreibung der Zeichnungen

Vorteilhafte Ausführungsformen der Erfindung werden im Folgenden anhand der Zeichnungen näher erläutert. Im Einzelnen zeigen:
- Figur 1: eine Kraftfahrzeuglenkung,
- Figur 2: eine erfindungsgemäße Lenkwelle in perspektivischer Ansicht,
- Figur 3: die Hohlwelle der Lenkwelle gemäß Figur 2 in perspektivischer Ansicht,
- Figur 4: die Zahnwelle der Lenkwelle gemäß Figur 2 in perspektivischer Ansicht,
- Figur 5: eine Zahnwelle während der Einformung erfindungsgemäßer Formschluss-elemente mittels einer Rolliervorrichtung,
- Figur 6: eine Ansicht auf die Rolliervorrichtung gemäß Figur 5 in axialer Richtung,
- Figur 7: eine Detailansicht einer Zahnwelle nach dem Rollieren,
- Figur 8: eine vergrößerte Querschnittansicht einer in einem Spritzgießwerkzeug eingespannten Zahnwelle gemäß Figur 7,
- Figur 9: ein Längsschnitt durch ein Spritzgießwerkzeug in geschlossenem Zustand vor dem Einspritzen von Kunststoff,
- Figur 10: ein Längsschnitt durch das Spritzgießwerkzeug gemäß Figur 8 in geschlossenem Zustand nach dem Einspritzen von Kunststoff,
- Figur 11: ein Längsschnitt durch ein Spritzgießwerkzeug gemäß Figur 9 in entformtem (geöffnetem) Zustand.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

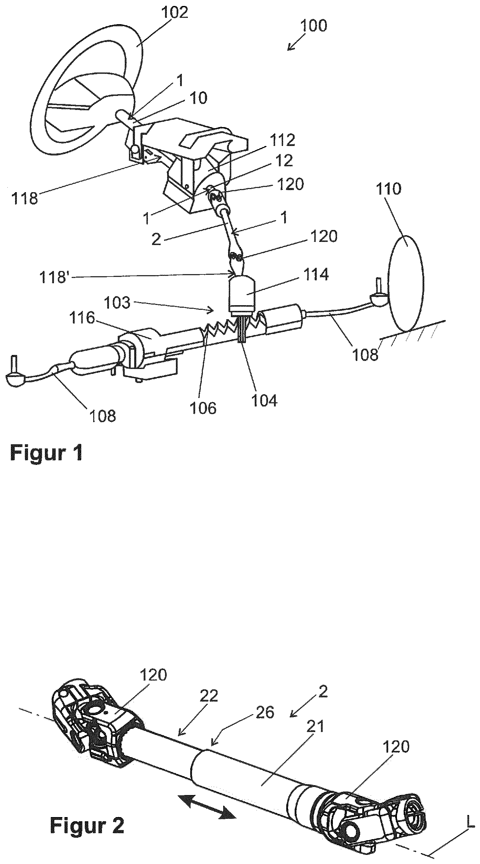

In Figur 1 ist eine Kraftfahrzeuglenkung 100 schematisch dargestellt, wobei ein Fahrer über ein Lenkrad 102 manuell ein Lenk-Drehmoment (Lenkmoment) als Lenkbefehl in eine Lenkwelle 1 einbringen kann. Das Lenkmoment wird über die Lenkwelle 1 auf ein Lenkritzel 104 übertragen, welches mit einer Zahnstange 106 kämmt, die dann ihrerseits über eine Verschiebung der Spurstangen 108 den vorgegebenen Lenkwinkel auf die lenkbaren Räder 110 eines nicht dargestellten Kraftfahrzeugs überträgt.

Eine elektrische Hilfskraftunterstützung kann in Form einer eingangsseitig mit der Lenkwelle 1 gekoppelten Hilfskraftunterstützung 112, einer mit dem Ritzel 104 gekoppelten Hilfskraftunterstützung 114 und/oder einer mit der Zahnstange 106 gekoppelten Hilfskraftunter-stützung 116 vorgesehen sein. Die jeweilige Hilfskraftunterstützung 112, 114 oder 116 koppelt ein Hilfsdrehmoment in die Lenkwelle 1 und/oder das Lenkritzel 104 und/oder eine Hilfskraft in die Zahnstange 106 ein, wodurch der Fahrer bei der Lenkarbeit unterstützt wird. Die drei unterschiedlichen, in der Figur 1 dargestellten Hilfskraftunterstützungen 112, 114 und 116 zeigen mögliche Positionen für deren Anordnung.

Üblicherweise ist nur eine einzige der gezeigten Positionen mit einer Hilfskraftunterstützung 112, 114 oder 116 belegt. Das Hilfsdrehmoment bzw. die Hilfskraft, welche zur Unterstützung des Fahrers mittels der jeweiligen Hilfskraftunterstützung 112, 114 oder 116 aufgebracht werden soll, wird unter Berücksichtigung eines von einem Drehmomentsensor 118 ermittelten, vom Fahrer eingebrachten Lenkmoments bestimmt. Alternativ oder in Kombinati-on mit der Einbringung des Hilfsdrehmoments kann von der Hilfskraftunterstützung 112, 114, 116 ein zusätzlicher Lenkwinkel in das Lenksystem eingebracht werden, der sich mit dem vom Fahrer über das Lenkrad 102 aufgebrachten Lenkwinkel summiert.

Die Lenkwelle 1 weist eingangsseitig eine mit dem Lenkrad 102 verbundene Eingangswelle 10 und ausgangsseitig eine mit der Zahnstange 106 über das Lenkritzel 104 verbundene Ausgangswelle 12 auf. Die Eingangswelle 10 und die Ausgangswelle 12 sind drehelastisch über einen in der Figur 1 nicht zu erkennenden Drehstab miteinander gekoppelt. Damit führt ein von einem Fahrer über das Lenkrad 102 in die Eingangswelle 10 eingetragenes Drehmoment immer dann zu einer Relativdrehung der Eingangswelle 10 bezüglich der Ausgangswelle 12, wenn die Ausgangswelle 12 sich nicht exakt synchron zu der Eingangswelle 10 dreht. Diese Relativdrehung zwischen Eingangswelle 10 und Ausgangswelle 12 kann über einen Drehwinkelsensor gemessen werden und entsprechend aufgrund der bekannten Torsionssteifigkeit des Drehstabes ein entsprechendes Eingangsdrehmoment relativ zur Ausgangswelle 12 bestimmt werden. Auf diese Weise wird durch die Bestimmung der Relativdrehung zwischen Eingangswelle 10 und Ausgangswelle 12 der Drehmomentsensor 118 ausgebildet. Ein solcher Drehmomentsensor 118 ist prinzipiell bekannt und kann beispielsweise eine elektromagnetische Sensoranordnung, wie sie weiter unten beschrieben wird, oder durch eine andere Messung der Relativverdrehung realisiert werden.

Entsprechend wird ein Lenkmoment, welches von dem Fahrer über das Lenkrad 102 auf die Lenkwelle 1 beziehungsweise die Eingangswelle 10 aufgebracht wird, nur dann den Eintrag eines Hilfsdrehmoments durch eine der Hilfskraftunterstützungen 112, 114, 116 bewirken, wenn die Ausgangswelle 12 gegen den Drehwiderstand des Drehstabs relativ zu der Eingangswelle 10 verdreht wird.

Der Drehmomentsensor 118 kann auch alternativ an der Position 118' angeordnet sein, wobei dann die Durchbrechung der Lenkwelle 1 in Eingangswelle 10 und Ausgangswelle 12 und die drehelastische Kopplung über den Drehstab entsprechend an einer anderen Position vorliegt, um aus der Relativverdrehung der über den Drehstab mit der Eingangswelle 10 gekoppelten Ausgangswelle 12 eine Relativdrehung und damit entsprechend ein Eingangsdrehmoment und/oder ein einzubringendes Hilfsdrehmoment bestimmen zu können.

Die Lenkwelle 1 gemäß Figur 1 umfasst weiterhin mindestens ein kardanisches Gelenk 120, mittels welchem der Verlauf der Lenkwelle 1 im Kraftfahrzeug an die räumlichen Gegebenheiten angepasst werden kann. Der Lenkzwischenwelle der Lenkwelle 1, der in dem dargestellten Beispiel zwischen zwei kardanischen Gelenken 120 angeordnet ist und die Ausgangswelle 12 mit dem Ritzel 104 des Lenkgetriebes 103 verbindet, ist erfindungsgemäß als längenveränderbare Lenkwelle 2 ausgebildet.

Figur 2 zeigt eine perspektivische Ansicht der Lenkwelle 2 in montiertem Zustand.

Die Lenkwelle 2 umfasst eine Hohlwelle 21 und eine Zahnwelle 22. Die Zahnwelle 22 weist eine Verzahnung 23 mit einer Mehrzahl von auf dem Außenumfang angeordneten Zähnen 24 auf, die sich in Richtung der Längsachse L, d.h. axial über die Länge V der Verzahnung 23 erstrecken. An ihrem gelenkseitigen Ende weisen die Hohlwelle 21 und die Zahnwelle 22 jeweils eine Gelenkgabel 121 auf.

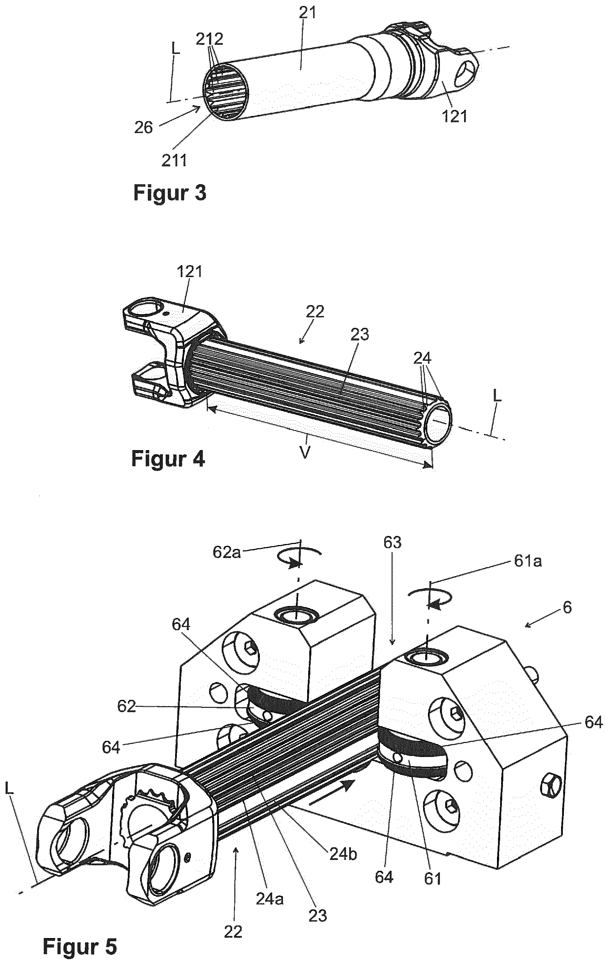

Die Hohlwelle 21, die in Figur 3 in einer perspektivischen Ansicht dargestellt ist, weist eine zur Zahnwelle 22 hin offene Aufnahmeöffnung 26 auf, in der eine Innenverzahnung 211 mit Zähnen 212 ausgebildet ist, in welcher die Zahnwelle 22 in axialer Richtung, d.h. in Richtung der Längsachse L aufnehmbar ist. Zur Herstellung einer drehmomentschlüssigen Verbindung wird die Zahnwelle 22 mit ihrem freien Ende in axialer Richtung, d.h. in Richtung der Längsachse L in die Aufnahmeöffnung 26 der Hohlwelle 21 eingeführt, so dass der in Figur 2 dargestellte montierte Zustand erreicht wird, wobei durch das gegenseitige Eingreifen der Zähne 24 und 212 unter Zwischenschaltung der Gleitbeschichtung (5) eine bezüglich Drehung um die Längsachse L formschlüssige Verbindung erzeugt wird. In diesem zusammengebauten Zustand können die Zahnwelle 22 und die Hohlwelle 21 zum Ausgleich von Abstandsunterschieden axial in Richtung der Längsachse L relativ zueinander bewegt werden, wie in Figur 2 mit dem Doppelpfeil angedeutet.

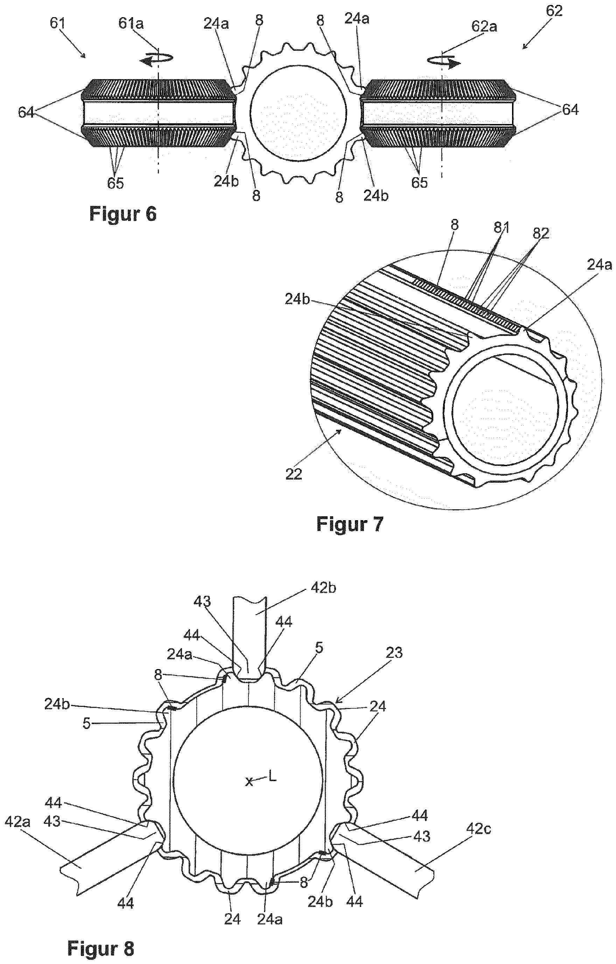

In Figuren 5 und 6 ist eine Rolliervorrichtung 6 dargestellt, die zwei Rollierwalzen 61 und 62 umfasst. Die Rollierwalzen 61 und 62 können um die Rotationsachsen 61a und 62a frei rotieren.. Die Rotationsachsen 61a und 62a sind parallel mit Abstand zueinander angeordnet, so dass zwischen den äußeren Umfangsflächen der Rollierwalzen 61 und 62 ein senkrecht zwischen den Rotationsachsen 61a und 62a durchgehender Bearbeitungsdurchgang 63 frei bleibt. Die Rotationsachsen 61a und 62a weisen einen festen und unveränderbaren Abstand zueinander auf.

Auf ihren im Bearbeitungsdurchgang einander gegenüberliegenden Umfangsflächen weisen die Rollierwalzen 61 und 62 jeweils zwei umlaufende Rändelprofile 64 auf, die auf ihren gegeneinander und gegen die Rotationsachsen 61a bzw. 62a geneigten, kegeligen Mantelflächen eine Vielzahl von Rändelzähnen 65 aufweisen. Die Rollierwalzen 61 und 62 bestehen zumindest im Bereich der Rändelprofile 64 aus einem harten Material, beispielsweise Hartmetall oder gehärtetem Werkzeugstahl, welches deutlich härter ist als das Material der Zahnwelle 23.

Zur Durchführung des erfindungsgemäßen Verfahrens wird eine Zahnwelle 22 wie in Figur 5 gezeigt mit ihrem freien Ende in Richtung der Längsachse L in den Bearbeitungsdurchgang 63 zwischen die Rollierwalzen 61 und 62 eingeführt, wodurch die Rollierwalzen 61 und 62 durch das Einführen der Zahnwelle gegensinnig in Rotation versetzt werden. Der Abstand der Rollierwalzen 61 und 62 ist so bemessen, dass die Rändelprofile 64 gegen die einander in Umfangsrichtung gegenüberliegenden Flanken der benachbarten Zähne 24a und 24b mit einem vorgegebenen Bearbeitungsdruck angepresst werden, wie aus Figur 6 entnehmbar ist. Durch die Vorschubbewegung der Zahnwelle 22in Richtung der Längsachse L wird die Verzahnung 23 der Zahnwelle 22 in den Bearbeitungsdurchgang 63 der Rolliervorrichtung 6 hineinbewegt. Dabei rollen die Rändelprofile 64 auf den Flanken der Zähne 24a und 24b ab, und die Rändelzähne 65 werden unter plastischer Kaltverformung in die Oberflächen der Zähne 24a und 24b eingeformt. Dadurch wird auf den Flanken der Zähne 24a und 24b eine in Richtung der Längsachse L zumindest über einen Teil der Länge V durchgehende Rändelung 8 eingeformt, welche eine auf den Flanken der Zähne 24a und 24b flächenhaft erstreckte Profilierung bildet mit in Richtung der Längsachse L abwechselnd eingeformten Vertiefungen 81 und dazwischen aufgeworfenen Erhebungen 82. Die Vertiefungen 81 und Erhebungen 82 erstrecken sich jeweils quer zur Längsachse L, ermöglichen also die Erzeugung einer in axialer Richtung wirksamen Formschlussverbindung.

Unter der Vorschubbewegung kann sowohl eine Verschiebung der Zahnwelle 22 in Richtung der Längsachse mit und ohne Richtungsumkehr verstanden werden. Somit ist es möglich, die Zahnwelle 22 sowohl mit einer durchgehenden Rändelung 8, die sich über die gesamte Länge der Verzahnung 23 erstreckt, zu versehen, als auch mit einer partiellen Rändelung 8 zu versehen, indem eine Richtungsumkehr der Bewegung der Zahnwelle 22 aus der Rolliervorrichtung 6 heraus einsetzt, wenn eine vorbestimmte Länge der Rändelung 8 erreicht ist.

Alternativ zu einer Vorschubbewegung der Zahnwelle 22 in die Rolliervorrichtung 6 hinein kann vorgesehen sein, dass die Rollierwalzen 61 und 62 mittels eines motorischen Antriebs gegensinnig rotierbar antreibbar sind, wobei die Verzahnung 23 in Richtung der Längsachse L in den Bearbeitungsdurchgang 63 der Rolliervorrichtung hineingezogen wird.

Figur 7 zeigt die Zahnwelle 22 im teilfertigen Zustand vor der Aufbringung einer Gleitschicht 5, die im gezeigten Beispiel als Kunststoff-Umspritzung ausgeführt wird. Die Zahnwelle besteht bevorzugt aus Metall, vorzugsweise aus Stahl oder einer Aluminiumlegierung. Im Bereich der Verzahnung 23 werden die Zähne 24 im Spritzgussverfahren mit Kunststoff umspritzt.

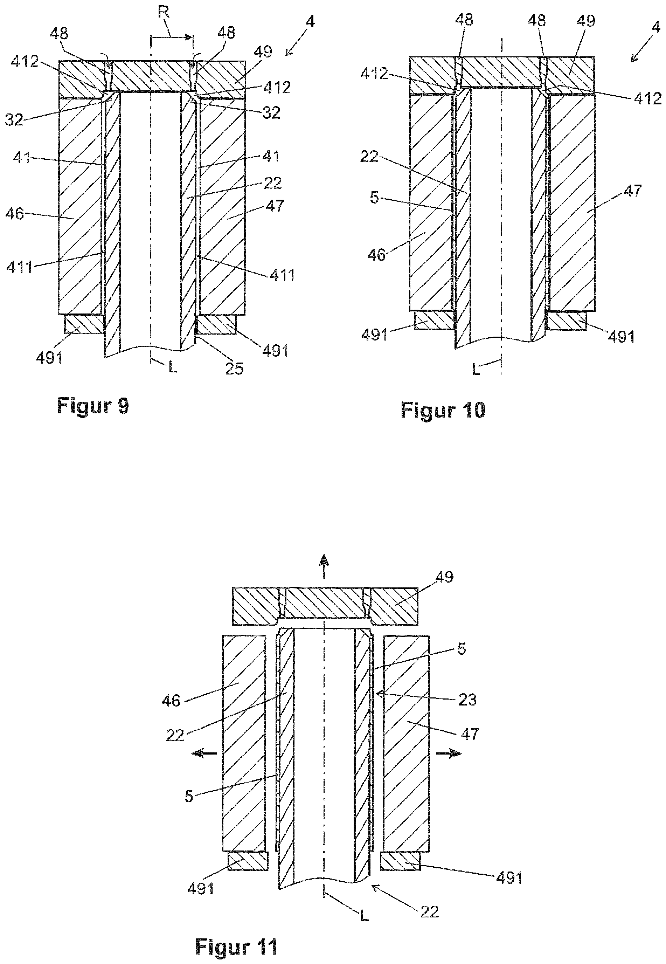

Beim Umspritzen wird die Zahnwelle 22 konzentrisch zur Längsachse L zwischen Positionierelementen 42a, 42b und 42c eingespannt. Die Anordnung der Positionierelemente 42a, 42b und 42c ist in Figur 7 schematisch gezeigt, wobei die übrige Spritzgussform 4 - die in den Figuren 9, 10 und 11 gezeigt ist-zur besseren Übersichtlichkeit weggelassen ist.

Die Positionierelemente 42a, 42b und 42c sind stiftförmig ausgebildet, im dargestellten Beispiel mit rechteckigem bzw. quadratischem Querschnitt, dessen Abmessung in Richtung der Längsachse L nur einen Bruchteil der Länge V der Verzahnung 23 beträgt. Im gezeigten Beispiel sind die drei Positionierelemente 42a, 42b und 42c gleichmäßig über den Umfang verteilt angeordnet und sind mit ihren freien Enden 43 radial nach innen gegen die Längsachse L gerichtet, so dass die Zahnwelle 22 zwischen den freien Enden 43 in einem Formhohlraum 41 koaxial relativ zur Längsachse L zentriert eingespannt ist, wie Figur 9 entnehmbar ist. In der Spritzgussform 4 ist die Zahnwelle 22 im Bereich der Verzahnung 23 von der die Zähne 24 begrenzenden Formfläche 411 umgeben, d.h. diese Formfläche 411 bildet den Negativabdruck der Verzahnung 23. Die Formfläche 411 ist ebenfalls koaxial zur Längsachse L orientiert. Im Detail ist diese Anordnung in der vergrößerten Darstellung von Figur 7 erkennbar.

Die Positionierelemente 42a, 42b und 42c weisen im Bereich ihrer freien Enden 43 Positionierflächen 44 auf. Die Positionierflächen 44 sind so angeordnet, dass sie mit den in Umfangsrichtung einander zugewandten Zahnflanken benachbarter Zähne 24 in Kontakt kommen. Dadurch können die Positionierelemente 42a, 42b und 42c mit den Positionierflächen 44 von außen jeweils formschlüssig zwischen benachbarte Zähne 24 eingreifen. Dadurch ist die Zahnwelle 22 durch die Positionierelemente 42a, 42b und 42c winkelgenau bezüglich einer Drehung um die Längsachse L innerhalb des Formhohlraums 41 orientiert und zentriert eingespannt. Die Positionierflächen 44 wirken mit der dem Positionierelement 42a, 42b und 42c zugewandten Zahnflanke des jeweiligen benachbarten Zahns 24 zusammen.

Um die Zahnwelle 22 innerhalb des Formhohlraums 41 einspannen zu können, sind die Positionierelemente 42a, 42b und 42c jeweils an einem Schieber 46 angebracht, der segmentartig ausgebildet ist und relativ zur Längsachse L radial bewegbar ist.

Zwischen den Schiebern 46 sind in Umfangsrichtung Schieber 47 angeordnet, die ebenfalls segmentartig ausgebildet sind und zum Entformen bezüglich der Längsachse L radial zusammen mit den Schiebern 46 kollisionsfrei auseinanderbewegt werden können.

Werden die Schieber 46 und 47 radial auseinander bewegt, kann eine Zahnwelle 22 in die Spritzgussform 4 eingebracht werden. Anschließend werden die Schieber 46 und 47 in radialer Richtung nach innen zusammengefahren, wobei die Zahnwelle 22 zwischen den Positionierflächen 44 der Positionierelemente 42a, 42b und 42c wie oben beschrieben zentriert und winkelorientiert im Formhohlraum 41 eingespannt wird. Gleichzeitig wird durch das Zusammenfahren der Schieber 46 und 47 die Spritzgussform 4 geschlossen, wobei die Formfläche 411 in Umfangsrichtung geschlossen wird.

Figuren 9, 10 und 11 zeigen jeweils einen Längsschnitt entlang der Längsachse L durch eine Spritzgussform 4, und zwar in geschlossenem Zustand vordem Einspritzen, d.h. ungefüllt (Figur 9), in mit Kunststoff gefülltem Zustand (Figur 10) sowie in geöffnetem Zustand zum Entformen (Figur 11).

Die Spritzgussform 4 weist segmentförmige Schieber 46 und 47 auf, die sternförmig um die Längsachse L angeordnet sind und mit ihren radial innen liegenden Formflächen 411 den Formhohlraum 41 begrenzen, der die Zahnwelle 22 im Bereich der Verzahnung23 umgibt. Am freien Ende der Zahnwelle 22, in der Figuren 9 bis 11 oben, ist der Formhohlraum 41 von einer Stirnwand 49 geschlossen, die wie dargestellt stirnseitig an der Zahnwelle 22 anliegt. Mit einem Abstand vom freien Ende ist der Formhohlraum 41 von einer weiteren Stirnwand 491 geschlossen. Die weitere Stirnwand 491 kann auch als Abdichtschieber bezeichnet werden. Diese Stirnwand 491 ist bevorzugt segmentartig ausgebildet und lässt sich sternförmig radial nach außen auseinanderbewegen, so dass die Zahnwelle 22 in die Spritzgussform 4 eingelegt werden kann bzw. nach dem Umspritzen die mit der Gleitschicht 5 umspritzte Zahnwelle 22 entnommen werden kann. Die Stirnwand 491 begrenzt das Fließen der Kunststoffschmelze während dem Umspritzen in Richtung der Längsachse L.

An ihrem freien Ende weist die Zahnwelle 22 eine umlaufende Fase 32 auf, die auch in Figur 4 erkennbar ist. Zwischen dieser Fase 32 und der Stirnwand 49 wird ein durchgehend ringförmiger Angussraum 412 gebildet, der zum Formhohlraum 41 offen ist. Die Anspritzpunkte 48 sind in der Stirnwand 49 auf einem zur Längsachse L koaxialen Kreis mit Radius R angeordnet, und zwar bevorzugt in gleichen Winkelabständen zueinander, so dass sie stirnseitig in den Angussraum 412 einmünden. Folglich kann durch die Anspritzpunkte 48 schmelzflüssiger thermoplastischer Kunststoff in axialer Richtung in den Angussraum 412 eingespritzt werden, wie dies in Figur 9 mit den Pfeilen angedeutet ist. Der Angussraum 412 bildet den axialen Endbereich des Formhohlraums 41, entsprechend erfolgt das Einspritzen des Kunststoffs erfindungsgemäß von dem axialen Endbereich des Formhohlraums 41 aus, der durch seine Abmessungen und die Wandstärke der Kunststoff-Umspritzung 5 definiert, welche die Gleitbeschichtung bildet. Der axiale Endbereich ist bevorzugt im Bereich der Stirnseite der Zahnwelle 22 angeordnet.

Der durch die Anspritzpunkte 48 eingespritzte Kunststoff füllt zunächst den Angussraum 412 aus und bewegt sich anschließend mit einer einheitlichen, den zur Längsachse L koaxial ringförmigen Formhohlraum 41 über seinen gesamten Umfang ausfüllenden, geschlossenen Fließfront in axialer Richtung an der Verzahnung 23 entlang, bis die gegenüberliegende Stirnwand 491 erreicht ist. Dieser gefüllte Zustand ist in Figur 10 dargestellt, bei dem der Formhohlraum 41 vollständig mit Kunststoff gefüllt ist, so dass mit anderen Worten der Formhohlraum 41 vollständig mit der die Gleitschicht 5 bildenden Kunststoff-Umspritzung ausgefüllt ist.

Nach dem Erkalten kann die fertige Zahnwelle 22 entformt werden, was in Figur 10 dargestellt ist. Nach dem Abkühlen und Aushärten der Gleitschicht 5 werden die Schieber 46 und 47 zum Entformen sternförmig radial nach außen auseinanderbewegt, und die Stirnwand 48 wird in axialer Richtung vom freien Ende der Zahnwelle 22 wegbewegt, wie dies in Figur 9 mit den radialen und axialen Pfeilen angedeutet ist. Dann kann die fertig umspritzte Zahnwelle 22 aus der Spritzgussform 4 entnommen werden.

Bei der vorangehend beschriebenen Umspritzung wird im Spritzgussverfahren schmelzflüssiger Kunststoff auf die Oberfläche der Verzahnung 23 aufgebracht und ist nach dem Erstarren mit der Oberfläche der Zähne 24, 24a und 24b kraftschlüssig verbunden. Die Vertiefungen 81 und Erhebungen 82 der Rändelung 8 werden dabei ebenfalls vollständig mit Kunststoffmaterial gefüllt, so dass sie nach dem Erstarren formschlüssig in den Kunststoff der Gleitschicht 5 eingebettet sind. Dadurch wird zusätzlich zu der im Stand der Technik beschriebenen kraftschlüssigen Verbindung durch Umspritzen eine in axialer Richtung wirksame Formschlussverbindung durch die der Umspritzung vorgeschaltete Ausbildung vom Formschlusselementen in Form einer Rändelung 8 realisiert. Dadurch wird der Halt und die Belastbarkeit der Gleitschicht 5 in axialer Richtung verbessert und ein Ablösen von der Zahnwelle 22 wirksam verhindert.

### Bezugszeichenliste

- 1: Lenkwelle
- 10: Eingangswelle
- 12: Ausgangswelle
- 100: Kraftfahrzeuglenkung
- 102: Lenkrad
- 103: Lenkgetriebe
- 104: Lenkritzel
- 106: Zahnstange
- 108: Spurstange
- 110: lenkbares Rad
- 112,114,116: Hilfskraftunterstützung
- 118, 118': Drehmomentsensor
- 120: Gelenk
- 121: Gelenkgabel
- 2: längenveränderbare Lenkwelle
- 21: Hohlwelle
- 211: Innenverzahnung
- 212: Zähne
- 22: Zahnwelle
- 23: Verzahnung
- 24, 24a, 24b: Zähne
- 26: Aufnahmeöffnung
- 32: Fase
- 4: Spritzgussform/Spritzgießwerkzeug
- 41: Formhohlraum
- 411: Formfläche
- 412: Angussraum
- 42a,b,c: Positionierelement
- 43: freies Ende
- 44: Positionierflächen
- 46, 47: Schieber
- 48: Anspritzpunkt
- 49, 491: Stirnwand
- 6: Rolliervorrichtung
- 61, 62: Rollierwalzen
- 61a, 62a: Rotationsachsen
- 63: Bearbeitungsdurchgang
- 64: Rändelprofile
- 65: Rändelzähne
- 8: Rändelung
- 81: Vertiefungen
- 82: Erhebungen

- 5: Kunststoff-Umspritzung
- L: Längsachse
- V: Länge Verzahnungsbereich
- R: Radius

## Patentansprüche

1. Verfahren zur Herstellung einer längenveränderbaren Lenkwelle (2), umfassend eine Hohlwelle (21), in der eine Zahnwelle (22) in axialer Richtung (L) teleskopierbar aufgenommen ist, die eine Verzahnung (23) mit sich auf dem Außenumfang in axialer Richtung erstreckenden Zähnen (24) aufweist, die in eine Innenverzahnung (211) der Hohlwelle (21) formschlüssig eingreift, wobei zwischen der Innenverzahnung (211) und der Verzahnung (23) zumindest abschnittweise eine Gleitschicht (5) aus thermoplastischem Kunststoff angebracht wird,
wobei vor dem Anbringen der Gleitschicht (5) im Bereich der Verzahnung (23) der Zahnwelle (22) oder der Innenverzahnung (211) der Hohlwelle (21) Formschlusselemente (8) ausgebildet werden, die mit der Gleitschicht (5) in Eingriff gebracht werden zur Bildung einer in axialer Richtung wirksamen Formschlussverbindung, **dadurch gekennzeichnet, dass** die Formschlusselemente (8) in die Oberfläche der Verzahnung (23) oder der Innenverzahnung (211) plastisch eingeformt werden, und mittels rotierender Profilwalzen (61, 62), die in axialer Richtung auf der Oberfläche der Verzahnung (23) abrollen, in die Oberfläche eingewalzt werden.

2. Verfahren nach Anspruch 1, **dadurch gekennzeichnet, dass** die Formschlusselemente (8) als Profilierung ausgebildet sind mit einer Mehrzahl von in axialer Richtung voneinander beabstandeten Erhebungen (81) und/oder Vertiefungen (82).

3. Verfahren nach einem der vorangehenden Ansprüche, **dadurch gekennzeichnet, dass** die Gleitschicht (5) durch eine Gleitbeschichtung aus thermoplastischem Kunststoff gebildet wird, mit der die Verzahnung (23) oder die Innenverzahnung (211) umspritzt wird.

4. Verfahren nach einem der vorangehenden Ansprüche, **dadurch gekennzeichnet, dass** die Gleitschicht (5) durch eine Gleithülse gebildet wird, die zwischen die Verzahnung (23) und die Innenverzahnung (211) in axialer Richtung eingefügt wird, wobei die Formschlusselemente (8) plastisch in die Gleithülse eingeformt werden.

5. Verfahren nach einem der vorangehenden Ansprüche, **dadurch gekennzeichnet, dass** die Tiefe der Formschlusselemente (8) 10% bis 40% der Materialdicke der Gleitschicht (5) beträgt.

6. Längenveränderbare Lenkwelle (2), umfassend eine Hohlwelle (21), in der eine Zahnwelle (22) in axialer Richtung (L) teleskopierbar aufgenommen ist, die eine Verzahnung (23) mit sich auf dem Außenumfang in axialer Richtung erstreckenden Zähnen (24) aufweist, die in eine Innenverzahnung (211) der Hohlwelle (21) formschlüssig eingreift, wobei zwischen der Innenverzahnung (211) und der Verzahnung (23) zumindest abschnittweise eine Gleitschicht (5) aus thermoplastischem Kunststoff angebracht ist,
wobei im Bereich der Verzahnung (23) der Zahnwelle (22) oder der Innenverzahnung (211) der Hohlwelle (21) Formschlusselemente (8) ausgebildet sind, die mit der Gleitschicht (5) in Eingriff stehen zur Bildung einer in axialer Richtung wirksamen Formschlussverbindung, **dadurch gekennzeichnet, dass** die Formschlusselemente (8) in die Oberfläche der Verzahnung (23) oder der Innenverzahnung (211) plastisch eingeformt sind, und mittels rotierender Profilwalzen (61, 62), die in axialer Richtung auf der Oberfläche der Verzahnung (23) abrollen, in die Oberfläche eingewalzt sind.

7. Lenkwelle (2) nach Anspruch 6, **dadurch gekennzeichnet, dass** die Formschlusselemente (8) eine Profilierung mit einer Mehrzahl von in axialer Richtung voneinander beabstandeten Erhebungen (81) und/oder Vertiefungen (82) umfassen.

8. Lenkwelle (2) nach einem der Ansprüche 6 bis 7, **dadurch gekennzeichnet, dass** die Gleitschicht (5) als Umspritzung ausgebildet ist.

9. Lenkwelle (2) nach einem der Ansprüche 6 bis 7, **dadurch gekennzeichnet, dass** die Gleitschicht (5) als Gleithülse ausgebildet ist.

## Claims

1. Method for producing a length-adjustable steering shaft (2), comprising a hollow shaft (21) in which a toothed shaft (22) is received so as to be telescopic in the axial direction (L), said toothed shaft (22) having a toothing (23) which has teeth (24) on the external circumference that extend in the axial direction and which engages in a form-fitting manner in an inner toothing (211) of the hollow shaft (21), wherein a sliding layer (5) from thermoplastic plastics material is at least in portions attached between the inner toothing (211) and the toothing (23),
wherein, prior to attaching the sliding layer (5), form-fitting elements (8) which for forming a form-fitting connection that is effective in the axial direction are brought to engage with the sliding layer (5) are configured in the region of the toothing (23) of the toothed shaft (22) or the inner toothing (211) of the hollow shaft (21), **characterized in that** the form-fitting elements (8) are plastically formed in the surface of the toothing (23) or of the inner toothing (211) and are rolled into the surface by means of rotating profiled rollers (61, 62) which roll in the axial direction on the surface of the toothing (23).

2. Method according to Claim 1, **characterized in that** the form-fitting elements (8) are configured as a profiled feature having a plurality of elevations (81) and/or depressions (82) that are mutually spaced apart in the axial direction.

3. Method according to one of the preceding claims, **characterized in that** the sliding layer (5) is formed by a sliding coating from thermoplastic plastics material by way of which the toothing (23) or the inner toothing (211) is overmolded.

4. Method according to one of the preceding claims, **characterized in that** the sliding layer (5) is formed by a sliding sleeve which is inserted in the axial direction between the toothing (23) and the inner toothing (211), wherein the form-fitting elements (8) are plastically formed in the sliding sleeve.

5. Method according to one of the preceding Claims, **characterized in that** the depth of the form-fitting elements (8) is 10% to 40% of the material thickness of the sliding layer (5).

6. Length-adjustable steering shaft (2), comprising a hollow shaft (21) in which a toothed shaft (22) is received so as to be telescopic in the axial direction (L), said toothed shaft (22) having a toothing (23) which has teeth (24) on the external circumference that extend in the axial direction and which engages in a form-fitting manner in an inner toothing (211) of the hollow shaft (21), wherein a sliding layer (5) from thermoplastic plastics material is at least in portions attached between the inner toothing (211) and the toothing (23), wherein, form-fitting elements (8) which for forming a form-fitting connection that is effective in the axial direction engage with the sliding layer (5) are configured in the region of the toothing (23) of the toothed shaft (22) or the inner toothing (211) of the hollow shaft (21), **characterized in that** the form-fitting elements (8) are plastically formed in the surface of the toothing (23) or of the inner toothing (211) and are rolled into the surface by means of rotating profiled rollers (61, 62) which roll in the axial direction on the surface of the toothing (23).

7. Steering shaft (2) according to Claim 6, **characterized in that** the form-fitting elements (8) comprise a profiled feature having a plurality of elevations (81) and/or depressions (82) that are mutually spaced apart in the axial direction.

8. Steering shaft (2) according to one of Claims 6 and 7, **characterized in that** the sliding layer (5) is configured as an overmolding.

9. Steering shaft (2) according to either of Claims 6 and 7, **characterized in that** sliding layer (5) is configured as a sliding sleeve.

## Revendications

1. Procédé de fabrication d'un arbre de direction de longueur variable (2), comprenant un arbre creux (21) dans lequel est reçu, de manière télescopable dans la direction axiale (L), un arbre denté (22) qui présente une denture (23) avec des dents (24) s'étendant dans la direction axiale sur la périphérie extérieure, laquelle vient en prise par engagement par correspondance de formes dans une denture intérieure (211) de l'arbre creux (21), entre la denture intérieure (211) et la denture (23), étant appliquée au moins en partie une couche de glissement (5) en plastique thermoplastique,
des éléments d'engagement par correspondance de formes (8) étant réalisés avant l'application de la couche de glissement (5) dans la région de la denture (23) de l'arbre denté (22) ou de la denture intérieure (211) de l'arbre creux (21), lesquels sont amenés en prise avec la couche de glissement (5) pour former une liaison par engagement par correspondance de formes agissant dans la direction axiale, **caractérisé en ce que** les éléments d'engagement par correspondance de formes (8) sont formés plastiquement dans la surface de la denture (23) ou de la denture intérieure (211), et sont laminés dans la surface au moyen de rouleaux profilés rotatifs (61, 62) qui roulent dans la direction axiale sur la surface de la denture (23).

2. Procédé selon la revendication 1, **caractérisé en ce que** les éléments d'engagement par correspondance de formes (8) sont réalisés sous forme de profilage avec une pluralité de rehaussements (81) et/ou de renfoncements (82) espacés les uns des autres dans la direction axiale.

3. Procédé selon l'une quelconque des revendications précédentes, **caractérisé en ce que** la couche de glissement (5) est formée par un revêtement de glissement en plastique thermoplastique avec lequel la denture (23) ou la denture intérieure (211) est surmoulée.

4. Procédé selon l'une quelconque des revendications précédentes, **caractérisé en ce que** la couche de glissement (5) est formée par une douille de glissement qui est introduite dans la direction axiale entre la denture (23) et la denture intérieure (211), les éléments d'engagement par correspondance de formes (8) étant formés plastiquement dans la douille de glissement.

5. Procédé selon l'une quelconque des revendications précédentes, **caractérisé en ce que** la profondeur des éléments d'engagement par correspondance de formes (8) est de 10 % à 40 % de l'épaisseur de matériau de la couche de glissement (5).

6. Arbre de direction de longueur variable (2), comprenant un arbre creux (21) dans lequel est reçu, de manière télescopable dans la direction axiale (L), un arbre denté (22) qui présente une denture (23) avec des dents (24) s'étendant dans la direction axiale sur la périphérie extérieure, laquelle vient en prise par engagement par correspondance de formes dans une denture intérieure (211) de l'arbre creux (21), entre la denture intérieure (211) et la denture (23), étant appliquée au moins en partie une couche de glissement (5) en plastique thermoplastique, des éléments d'engagement par correspondance de formes (8) étant réalisés dans la région de la denture (23) de l'arbre denté (22) ou de la denture intérieure (211) de l'arbre creux (21), lesquels sont en prise avec la couche de glissement (5) pour former une liaison par engagement par correspondance de formes agissant dans la direction axiale, **caractérisé en ce que** les éléments d'engagement par correspondance de formes (8) sont formés plastiquement dans la surface de la denture (23) ou de la denture intérieure (211), et sont laminés dans la surface au moyen de rouleaux profilés rotatifs (61, 62) qui roulent dans la direction axiale sur la surface de la denture (23).

7. Arbre de direction (2) selon la revendication 6, **caractérisé en ce que** les éléments d'engagement par correspondance de formes (8) comprennent un profilage avec une pluralité de rehaussements (81) et/ou de renfoncements (82) espacés les uns des autres dans la direction axiale.

8. Arbre de direction (2) selon l'une quelconque des revendications 6 et 7, **caractérisé en ce que** la couche de glissement (5) est réalisée sous forme de surmoulage.

9. Arbre de direction (2) selon l'une quelconque des revendications 6 et 7, **caractérisé en ce que** la couche de glissement (5) est réalisée sous forme de manchon coulissant.
